# EUROPEAN PATENT APPLICATION

(11) **EP 4 847 908 A1**
(43) Date of publication of application: **02.12.2026**
(21) Application number: 25382540.0
(22) Date of filing: 28.05.2025
(51) Int. Cl.: G01N 21/45, G01N 21/77, G01B 9/00, G02B 6/12

(54) **METHOD AND SYSTEM FOR SIMPLIFIED COHERENT READOUT OF INTERFEROMETRIC PHOTONIC BIOSENSORS**

(71) Applicant: Bioherent S.L., 29590 Málaga (ES)
(72) Inventor: Leuermann, Jonas, 29590 Málaga (ES); Martínez Castellano, Eduardo, 29590 Málaga (ES); Pérez Sánchez, Laura, 29590 Málaga (ES)
(74) Representative: Grünecker Patent- und Rechtsanwälte PartG mbB

(57) **Abstract**

The invention relates to a sensing device for detecting a target analyte in a fluidic sample, comprising: a photonic integrated circuit (100) comprising at least one photonic biosensor (101) for detecting a target analyte in a fluidic sample and at least one lossy structure (109) configured for radiating or absorbing optical power, wherein said at least one photonic biosensor comprises: a Mach-Zehnder interferometer (102) with two arms (102a, 102b) and a multimode interference coupler (103) connected to the two arms (102a, 102b) of the Mach-Zehnder interferometer (102), wherein the multimode interference coupler (103) has a plurality of outputs (103a, 103b, 103c), and wherein at least one output (103c) of the multimode interference coupler (103) is coupled to said at least one lossy structure (109) and the remaining outputs (103a, 103b) of the multimode interference coupler (103) are configured for coherent readout by a readout system.

## Description

### Field of invention

The present invention relates to a sensing device comprising a photonic integrated circuit with an interferometric photonic biosensor for detecting a target analyte in a fluidic sample, an interferometric photonic biosensor, a method for reading out a sensing device comprising a photonic integrated circuit, and a system for reading out a sensing device comprising a photonic integrated circuit.

### Background

Photonic integrated circuits are a key component of evanescent wave sensing devices, for example in photonic or optical biosensor devices for the detection and analysis of biomarkers, e.g. analytes, in biological samples.

A drawback of current sensing devices comprising photonic integrated circuits with interferometric photonic biosensors is that they are intricately built, have a large footprint, are costly to manufacture and challenging to operate.

Furthermore, obtaining a reliable, robust and accurate readout of current sensing devices comprising photonic integrated circuits with interferometric photonic biosensors is challenging.

### Problem

It is therefore the object of the present disclosure to provide an improved sensing device comprising a photonic integrated circuit with an interferometric photonic biosensor for detecting a target analyte in a fluidic sample and an improved method for reading out a sensing device comprising a photonic integrated circuit.

In particular, it is an object of the present invention to improve the robustness, efficiency, and compactness of a sensing device comprising a photonic integrated circuit with an interferometric photonic biosensor for detecting a target analyte in a fluidic sample.

Furthermore, it is an object of the present invention to improve the compactness of a photonic integrated circuit or chip comprising interferometric photonic biosensor, optimize, e.g. increase, the number of biosensors on a photonic integrated circuit or chip, reducing the manufacturing costs per photonic integrated circuit or chip and to enhance the yield ratio of the wafer from which the photonic integrated circuit(s) or chip(s) are manufactured.

It is also an object of the present invention to improve the robustness and efficiency with which a sensing device comprising a photonic integrated circuit with an interferometric photonic biosensor can be readout.

### Solution

According to the present disclosure, said objects are achieved by the subject-matter of the independent claims. Advantageous embodiments and further developments are the subject-matter of the dependent claims.

An exemplary sensing device for detecting a target analyte in a fluidic sample can comprise a photonic integrated circuit comprising at least one photonic biosensor for detecting a target analyte in a fluidic sample and at least one lossy structure configured for radiating optical power or configured for absorbing optical power.

In particular, said at least one photonic biosensor can be an interferometric photonic biosensor.

For example, said at least one photonic biosensor can comprise a Mach-Zehnder interferometer with two arms and a multimode interference coupler connected to the two arms, i.e. the reference arm and the sensing arm, of the Mach-Zehnder interferometer, wherein the multimode interference coupler has a plurality of outputs, in particular more than two outputs.

In the following, the term photonic biosensor can be understood as referring to an interferometric photonic biosensor.

Said exemplary at least one photonic biosensor is an example for a sensing mechanism that is based on evanescent wave sensing, wherein inputted light, in particular coherent inputted light, propagates along each arm of the Mach-Zehnder interferometer in one or more specific electromagnetic modes. The confined field profile of each mode partially penetrates or extends into a/the surrounding medium.

During a detection or sensing event, e.g. when a target analyte diluted or suspended in a fluidic sample is transported to the vicinity of the sensing arm, i.e. to the environment surrounding the sensing arm of the Mach-Zehnder interferometer, the refractive index of the environment surrounding the sensing arm of the changes dynamically.

As a consequence thereof, the propagation constant of the mode of the sensing arm, which is inversely proportional to the propagation speed or phase velocity, changes accordingly.

When the modes of both arms recombine at the multimode interference coupler that is coupled to both Mach-Zehnder interferometer arms, a dynamic interferometric output signal is generated at each multimode interference coupler output, from which the phase shift corresponding to the sensing event, e.g. the detection of target analyte in the fluidic sample, can be extracted.

The at least one output of the multimode interference coupler can be coupled to said at least one lossy structure and the remaining outputs of the multimode interference coupler can be configured for coherent readout by a readout system.

For example, the remaining outputs can be coupled to readout structures, e.g. output gratings, which can relay or emit the optical signals, i.e. the interferometric output signals, from the remaining outputs of the multimode interference coupler to a readout system.

In other words, a remaining output of the multimode interference coupler configured for coherent readout by a readout system can, inter alia, be understood as that output being coupled to one or more readout structures, e.g. gratings, on the photonic integrated circuit, which can relay the interferometric output signal of said output to a/the readout system.

Stated differently, the remaining outputs of the multimode interference coupler can provide a coherent dynamic interferometric output signal that can be readout by a readout system and that can be analyzed such that a detection of a target analyte in a/the fluidic sample can be carried out.

Herein, a coherent readout can be understood as referring to a readout that preserves the relative phase relationship of the interferometric output signals of the multimode interference coupler over space and time. The above and herein exemplary described multimode interference couplers preserve the relative phase relationship between the sensing arm and the reference arm. In particular, the multimode interference coupler(s) can preserve the phase shift induced by a sensing event in the sensing arm with reference to the reference arm.

Furthermore, the term coherent inputted light can be understood as referring to light inputted from a coherent light source, e.g. a laser, into the photonic biosensor. Stated differently, the coherent inputted light can serve as a reference with respect to which phase shifts induced by sensing events in the light propagating in the sensing arm can be measured.

Said analysis can comprise deriving a complex interferometric signal from the collected interferometric output signals from the outputs of the multimode interference coupler that are not coupled to said at least one lossy structure.

The term photonic integrated circuit can herein inter alia be understood as a microchip or chip comprising photonic components as part of a functioning integrated circuit. In other words, the term photonic integrated circuit may also be referred to as an on-chip photonic integrated circuit which, for example, can comprise a substrate, e.g. a silicon-based substrate, onto which the photonic integrated circuit can be integrated.

Said photonic integrated circuit may also be referred to herein as photonic chip or chip.

For completeness, it is noted that said photonic integrated circuit or said photonic chip may in addition also comprise further electrical integrated circuits, e.g. said photonic integrated circuit or said photonic chip may comprise a mixture of photonic circuits and electrical circuits.

As indicated above, the photonic integrated circuit of the herein exemplary described sensing device can comprise at least one photonic biosensor for detecting a target analyte in a fluidic sample, wherein said photonic biosensor can comprise the above exemplary described components, e.g. a Mach-Zehnder interferometer with a multimode interference coupler connected to the two arms of the Mach-Zehnder interferometer.

The above and herein exemplary described sensing device allows a reduction of the space or area normally required for readout structures, e.g. gratings, on the photonic integrated circuit and that couple the output signal, i.e. the interferometric output signal, to a/the readout system.

In other words, the above and herein exemplary described sensing device allows a reduction of footprint of the readout area for each photonic biosensor(s) on the photonic integrated circuit and to reduce the number of readout devices per photonic biosensor, thereby allowing the provision of a more compact, more miniaturized sensing device that optimizes the layout and the form factor of the photonic integrated circuit of the sensing device.

The above and herein exemplary described sensing device optimizes miniaturization potential and biosensing multiplexation capabilities of the sensing device. The reduction in required space directly reduces manufacturing costs. For example, the solution presented here inter alia allows the production of more photonic integrated circuits or photonic chips per wafer.

In addition, by being able to reduce the size of the photonic integrated circuits or photonic chips, the likelihood of defects on the photonic integrated circuits or photonic chips can be reduced, thereby increasing the quality of the photonic integrated circuits or photonic chips and improving manufacturing efficiency.

All this is achieved by eliminating the need to couple readout structures to every output of the multimode interference coupler.

Against commonly held technical prejudices stating that coherent readout and detection of a target analyte in a fluidic sample is impossible with a two-output multimode interference coupler, the Applicant has surprisingly found a way to obtain a complex interferometric output signal from the interferometric output signals of said two outputs collected by a readout system and which allows a reliable and accurate detection of a target analyte in a/the fluidic sample.

For example, the multimode interference coupler can be a MxN multimode interference coupler, having M inputs, with M being an integer greater than two or equal to two, and having N outputs, with N being an integer greater than three or equal to three, wherein at least one output of the multimode interference coupler is coupled to said at least one lossy structure and wherein at least two outputs of the multimode interference coupler are configured for coherent readout by the readout system.

In particular, the multimode interference coupler connected to the arms of the Mach-Zehnder interferometer of the above and herein exemplary described sensing device can be a 2x3 multimode interference coupler, having two inputs that are coupled to the arms outputs of the Mach-Zehnder interferometer, and having three outputs, wherein one output is coupled to said at least one lossy structure and the other two outputs are couplable configured for coherent readout by to the readout system.

This exemplary configuration allows the minimization of the footprint of the photonic integrated circuit of the sensing device, i.e. allows the optimization of the compactness of the sensing device.

It is also possible that the multimode interference coupler connected to the arms of the Mach-Zehnder interferometer of the above and herein exemplary described sensing device can be a 2x4 multimode interference coupler, having two inputs that are coupled to the arms of the Mach-Zehnder interferometer, and having four outputs, wherein two outputs are coupled to said at least one lossy structure or wherein said two outputs are coupled to different lossy structures; and wherein the other two outputs that are not coupled to a lossy structure are configured for coherent readout by the readout system.

This exemplary configuration allows optimizing the balance between the minimization of the footprint of the photonic integrated circuit and the quality and accuracy which a target analyte in a/the fluidic sample can be detected from interferometric output signals readout from the multimode interference coupler by a/the readout system.

The at least one lossy structure configured for radiating optical power or for absorbing optical power can be integrated into one of the outputs of the multimode interference coupler.

It is further possible that by not coupling an output of the multimode interference coupler to a readout structure, e.g. an output grating, that emits optical signals that can be collected by a/the readout system, said output itself can be said at least one lossy structure.

By eliminating the need to provide a readout structure for every output of the multimode interference coupler, the placement of the remaining readout structures on the photonic integrated circuit can be optimized, thereby enhancing the compactness of both the photonic integrated circuit and the sensing device.

Alternatively or in addition, the sensing device can comprise at least one lossy structure configured for radiating or absorbing optical power that can be coupled to at least two outputs of the multimode interference coupler.

The at least one lossy structure configured for radiating optical power from the output(s) of the multimode interference coupler to which it can be coupled can be configured for radiating all or at least more than 50% or more than 80% or more than 90% of the optical power of the output or of the outputs of the multimode interference coupler to which it can be coupled.

Alternatively, the at least one lossy structure configured for absorbing optical power from the output(s) of the multimode interference coupler to which it can be coupled can be configured for absorbing all or at least more than 50% or more than 80% or more than 90% of the optical power of the output or of the outputs of the multimode interference coupler to which it can be coupled.

In particular, the at least one lossy structure can be configured for radiating all the optical power of the output(s) of the multimode interference coupler to which it is coupled and can also be configured for preventing or minimizing any reflection of optical power back to the multimode interference coupler.

The at least one lossy structure configured for radiating optical power can inter alia be implemented as a grating and/or as waveguide, wherein said waveguide can comprise a narrowing or bending or discontinuity. Herein, a discontinuity may be understood as referring to waveguide that has been shortened, e.g. cut off, with respect to its original initial length.

When the at least one lossy structure is implemented as a grating, it can for example be implemented as transmission grating.

For example, the grating may comprise silicon-based materials, e.g. may comprise or consist of silicon nitride on silicon dioxide radiating into air.

An exemplary grating forming the at least one lossy structure and designed to radiate a fundamental mode output by the multimode interference coupler operating, for example, at a 1550 nm-wavelength, may have the following exemplary geometrical parameters: a height of 300 nm with fully etched trenches, a period of 1.680 µm and an exemplary duty cycle of 76.19%. However, other grating parameters are conceivable too.

When the at least one lossy structure is optionally implemented as a lossy structure configured for absorbing optical power, it may inter alia be implemented as an absorptive material with an absorption frequency that matches that of the interferometric output signals of the multimode interference coupler, and wherein the absorptive material is covering at least partially or fully the output of the multimode interference coupler to which the lossy structure is coupled.

The material absorption may be the product of different mechanisms such as the bandgap of a semiconductor, the plasma frequency of a metal, the energy of specific atomic bonds present in the material or transitions obtained as the result of material engineering processes (e.g. doping, material contacts, metamaterials or other processes). An exemplary semiconductor material acting as absorptive material may be Germanium, when, for example operating the photonic biosensor at wavelengths below a/the bandgap of Germanium, e.g. at 1876 nm. However, other semiconductor materials are conceivable too.

The photonic integrated circuit of the above and herein exemplary described sensing device can comprise an array of photonic biosensors, e.g. a 1 x 4 array. Furthermore, a plurality of such photonic biosensor arrays can be arranged on the surface of the photonic integrated circuit to accommodate several fluidic channels transporting different fluidic samples to each array for sensing events with different fluidic and chemical conditions.

As previously indicated, the Applicant has unexpectedly found that the interferometric output signals obtained from only two outputs of the multimode interference coupler already allow a reliable and accurate detection of a target analyte in a/the fluidic sample.

Moreover, the Applicant has found that it can be beneficial that the outputs of the multimode interference coupler that are configured for coherent readout by a/the readout system can be configured for providing a set of interferometric output signals that are separated by an off-axis component, i.e. that have a phase shift different from zero or 180°.

Herein, an on-axis phase direction can serve as the reference line or reference axis in the complex plane, e.g. typically aligned with 0°, along which the unshifted component of the interferometric signal is measured. Stated differently, the on-axis component can represent the original phase of an optical signal without any additional phase shift.

An off-axis component, in contrast, can then be understood as one that is deliberately phase-shifted, e.g. by 120° or 240° in a 2×3 MMI, relative to this reference.

The above and herein exemplary described sensing device further comprises a fluidic cartridge comprising at least one fluidic channel for transporting a fluidic sample to the at least one photonic biosensor, e.g. to the sensing arm of the Mach-Zehnder interferometer.

As indicated above, a photonic biosensor for detecting a target analyte in a fluidic sample for use in a sensing device exemplary described above and herein may comprise a Mach-Zehnder interferometer with two arms and a multimode interference coupler connected to the two arms of the Mach-Zehnder interferometer, wherein the multimode interference coupler can comprise a plurality of outputs, and wherein at least one output of the multimode interference coupler is couplable to at least one lossy structure configured for radiating optical power or for absorbing optical power, and wherein the remaining outputs of the multimode interference coupler are configured for coherent readout a readout system.

An exemplary method for reading out a sensing device as exemplary described above may comprise one, some or all of the following steps.

A step of inputting light from at least one light source into the at least one photonic biosensor of the photonic integrated circuit, and a step of reading out or collecting, by a readout system, optical signals, i.e. the interferometric output signals, only from a subset of all available output ports of the multimode interference coupler.

Stated differently, not all of the available output ports of the multimode interference coupler are read out, i.e. not all-available output ports of the multimode interference coupler are used for readout.

As explained above, at least one output port of the multimode interference coupler is not read out, i.e. at least one output port of the multimode interference coupler is not used for readout.

More specifically, the at least part or all of the optical power of the port(s) of the multimode interference coupler that is/are not readout is radiated away via a/the lossy structure exemplary described above.

Alternatively and as previously indicated, it is also possible that the at least part or all of the optical power of the port(s) of the multimode interference coupler that is/are not read out is absorbed by a/the lossy structure exemplary described above.

Herein, the terms optical signal(s) or light signal(s) may also refer to signals that are based on converted light signals, wherein the light signal has been converted to electric signals by the readout system, e.g. voltage signals generated by a photodetector, e.g. photodiodes of a photodetector.

The exemplary method may further comprise a calibration of the collected optical signals, i.e. the collected interferometric output signal(s).

The possible calibration can further improve the accuracy with which a target analyte in a/the fluidic sample can be detected from the interferometric output signals.

The possible calibration can compensate for coupling losses between the sensing device and the readout system that collects the interferometric output signals from the sensing device.

Said possible calibration can inter alia comprise fitting an ellipse or circle to a/the complex interferometric signal calculated/derived from the collected interferometric output signals in the in-phase (I) and quadrature (Q) components plane.

Said exemplary fitting may inter alia comprise rotating and/or recentering and/or minimizing the eccentricity of an ellipse in the in-phase (I) and quadrature (Q) components plane that is to be fitted to an/the complex interferometric signal derived from the collected interferometric output signals and scaling the ellipse to fit the unit circle. When applying the same transformation to the original complex interferometric signal to which the ellipse was fitted, the phase of the complex interferometric output signal can be extracted with improved accuracy.

An exemplary system for reading out a sensing device for detecting a target analyte in a fluidic sample as exemplary described above may comprise some or all of the following components:
- at least one light source;
- a sensing device that can comprise any of the above-described features;
- and a readout system.

The at least one light source can be configured for inputting light into the at least one photonic biosensor of the photonic integrated circuit of the sensing device. In particular, the at least one light source can be configured for inputting into the two arms of the Mach-Zehnder interferometer of the biosensor.

It is further possible that a 1x2 multimode interference coupler may be arranged between the at least one light source and the two arms of the Mach-Zehnder interferometer to equally distribute the power of the inputted light across the two arms of the Mach-Zehnder interferometer.

The readout system can be configured for collecting optical signals, i.e. interferometric output signals, only from a subset of all available output ports of the multimode interference coupler of the at least one photonic biosensor of the photonic integrated circuit of the sensing device.

The readout system can comprise a photodetector, wherein said photodetector may comprise a one-dimensional or two-dimensional photodiode array, e.g. a 4x4 photodiode array

The at least one light source can be a coherent light source, e.g. a laser, in particular a continuous-wave fiber laser, e.g. a continuous-wave fiber laser emitting in the range of 630 nm to 1550 nm and emitting an optical power in the range of 20 mW to 100 mW.

The following figures illustrate exemplary:
**Fig. 1****:** Exemplary photonic biosensor for use in a sensing device
**Fig. 2a****:** Exemplary 2x3 multimode interference coupler
**Fig.2b****:** Exemplary 2x4 multimode interference coupler
**Fig. 3a****:** Exemplary lossy structure
**Fig. 3b****:** Exemplary alternative lossy structure
**Fig. 3c****:** Exemplary alternative lossy structure
**Fig. 3d****:** Exemplary alternative lossy structure
**Fig. 4a****:** Exemplary interferometric output signals of a 2x3 multimode interference coupler
**Fig. 4b****:** Exemplary in-phase (I) and quadrature-phase (Q) signals
**Fig. 4c****:** Exemplary complex interferometric signal C
**Fig. 5a****:** Exemplary uncalibrated complex interferometric signal C
**Fig. 5b****:** Exemplary calibrated complex interferometric signal C
**Fig. 6a****:** Exemplary uncalibrated complex interferometric signal using only two outputs
**Fig. 6b****:** Exemplary calibrated complex interferometric signal using only two outputs

The Figures serve to exemplary illustrate certain technical aspects of some features of the subject-matter exemplary described above.

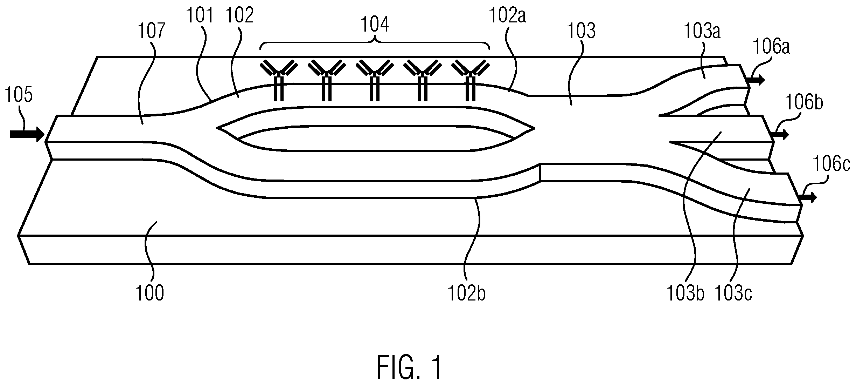

**Fig. 1** exemplary shows a simplified view of an exemplary photonic integrated circuit 100 comprising an exemplary photonic biosensor 101 for detecting a target analyte in a fluidic sample for use in a sensing device (not shown).

The photonic biosensor 101 comprises a Mach-Zehnder interferometer 102 with two arms 102a, 102b i.e. a sensing arm 102a and a reference arm 102b, and a multimode interference coupler 103, e.g. a 2x3 multimode interference coupler, connected to the two arms 102a, 102b of the Mach-Zehnder interferometer 102, wherein the multimode interference coupler has a plurality of outputs, e.g. three outputs 103a, 103b, 103c.

Stated differently, the exemplary two input ports of the exemplary 2x3 multimode interference coupler are connected the two arms 102a, 102b of the Mach-Zehnder interferometer 102, wherein one input port of the multimode interference coupler is connected to the sensing arm 102a of the Mach-Zehnder interferometer 102 and the other input port multimode interference coupler is connected to the reference arm 102b of the Mach-Zehnder interferometer 102.

The multimode interference coupler 102 receives two coherent optical signals, one from the sensing arm and one from the reference arm, which then interfere within the multimode interference coupler 102, thereby generating the three phase-shifted output signals at the outputs 103a, 103b, 103c of the multimode interference coupler.

Hence, the outputs 103a, 103b, 103c of the multimode interference coupler provide phase-shifted replicas of the interferometric output signal for each input port of the multimode interference coupler, i.e. for the outputs of the arms 102a, 102b of the Mach-Zehnder interferometer 102, and that can be relayed to and readout by a readout system (not shown).

For example, the outputs 103a, 103b, 103c can be connected to readout structures (not shown), e.g. output gratings, that can relay or emit the optical signals so that they can be collected for a coherent readout by a readout system (not shown).

In other words, the multimode interference coupler can provide three interferometric signals with a phase delay between them.

For example, when considering two input signals, i.e. optical signals from the sensing arm 102a and the reference arm 102b, with a temporally dynamic phase shift Δ*φ*(*t*) caused by a sensing event between them, wherein said phase shift has been induced by a fluidic sample in the vicinity of the sensing arm 102a interacting with the evanescent wave field of the sensing arm 102a, the ideal interferometric output signals *iₖ* outputted by the 2x3 multimode interference coupler 103 can be described by the following relation (Equation 1): ${i}_{k} \left(t\right) = \frac{{P}_{0}}{3} \times \left[1+cos\left({φ}_{0}+Δφ\left(t\right)+{φ}_{k}\right)\right] , {φ}_{k} = \left(\begin{matrix}- 120 ° \\ 0 \\ + 120 °\end{matrix}\right) , k = 1 , 2 , 3 .$

Herein, *P*₀ is the total power of the light inputted into the photonic biosensor 101, i.e. into the Mach-Zehnder interferometer 102, *φ*₀ is a constant phase difference between reference and sensing arm, and *φₖ* the phase shifts or phase offsets associated with k-th output of the multimode interference coupler, i.e. in the present case *φₖ* takes on the values 120°, 0°, and +120° for integer k = 1, 2, and 3 respectively. For completeness, it is noted that the constant *φ*₀ may be omitted for simplicity since it does not affect the detection of the sensing event.

These phase offsets arise from the intrinsic properties (S parameters) of the multimode interference coupler. According to theory, the use of a 2x2 multimode interference coupler for the same purpose results in two output signals phase-shifted by 180°, i.e. does not provide phase shifts different from 180°.

A coherent readout of an interferometric biosensor and detection of a target analyte in a fluidic sample based on phase shifts different from 180° is therefore not possible with a multimode interference coupler designed with fewer than 3 outputs.

Said interferometric output signals *iₖ* are the projections of the same phasorial signal on three axes of the complex plane, with a 120° tilt between them.

The complex interferometric signal = *Ae*^{-*j*Δ*φ*}, with *A* being the amplitude of the signal and *j* being the imaginary unit, can then be obtained as follows (Equation 2): $C = \left(\left(-\frac{1}{2}+j\frac{\sqrt{3}}{2}\right), 1, \left(-\frac{1}{2}-j\frac{\sqrt{3}}{2}\right)\right) ⋅ \left(\begin{matrix}{i}_{1} \\ {i}_{2} \\ {i}_{3}\end{matrix}\right)$

**Herein,** *i*₁, *i*₂ and *i*₃ are again the interferometric output signals *iₖ*(*t*) for the three outputs of the multimode interference coupler.

As mentioned above, the interferometric output signals *iₖ* from the outputs 103a, 103b, 103c of the multimode interference coupler can be relayed to readout structures (not shown), e.g. output gratings, that can further relay or emit the output signals so that they can be collected for a coherent readout by a readout system (not shown) and so that they can be analyzed for detecting a target analyte in a fluidic sample.

Furthermore, the interferometric output signals *iₖ* can be converted to photocurrents by the readout system.

As also already mentioned, the Applicant has unexpectedly found that the interferometric output signals obtained from only two outputs of the multimode interference coupler already allow a reliable and accurate detection of a target analyte in a fluidic sample.

More specifically, the Applicant has found that using only two interferometric output signals that are separated by an off-axis component, i.e. that have a phase shift different from zero or 180°, can allow a reliable and accurate detection of a target analyte in a fluidic sample.

Hence, in the illustrated example, using any pair of interferometric output signals, e.g. (*i*₁, *i*₂) or (*i*₁, *i*₃) or (*i*₂, *i*₃) is sufficient for the detection of a target analyte in a fluidic sample.

Hence, in the illustrated exemplary case, only two of the three outputs 103a, 103b, 103c of the multimode interference coupler need to be configured for coherent readout by a readout system (not shown), i.e. can be coupled to readout structures (not shown), e.g. output gratings, that can further relay or emit the output signals so that they can be collected for a coherent readout by a readout system (not shown).

The remaining output of the multimode interference coupler that is not readout can then be coupled to at least one lossy structure (not shown), which can be configured for radiating optical power away, e.g. at least 50% of the optical power outputted by said output into the surrounding of the multimode interference coupler. Said at least one lossy structure (not shown) can further be configured for preventing or minimizing any reflection of optical power back into the multimode interference coupler 103 via said not readout output.

Reducing the number of outputs that are to be readout allows a reduction of the space or area normally required for readout structures, e.g. gratings, on the photonic integrated circuit 100 and that couple the output signals, i.e. the interferometric output signals, to a/the readout system (not shown).

In other words, this allows a reduction of the footprint of the photonic biosensor 101 on the photonic integrated circuit 100, thereby allowing the provision of a more compact, more miniaturized sensing device that optimizes the layout and the form factor of the photonic integrated circuit 100 of the sensing device (not shown).

For completeness, it is noted that the reference numeral 104 denotes an exemplary illustration of the biochemical functionalization on the sensing arm 102a of the Mach-Zehnder interferometer 101.

The biochemical functionalization of the sensing arm enables the specific binding of the target analyte to the sensing arm surface, thereby enhancing the sensing specificity to the target analyte over other molecules or particles present in the fluidic sample.

For example, a liquid sample to be analyzed can be transported to the photonic biosensor 101 via fluidic channels of the sensing device (not shown), e.g. a fluidic cartridge, which comprises or accommodates the photonic integrated circuit 100.

The reference numeral 105 denotes exemplary light from a light source, e.g. a coherent light source, that is inputted into the photonic biosensor 101, i.e. into the Mach-Zehnder interferometer 102. The power of the light 105 can be evenly distributed over the two arms 102a, 102b of the Mach-Zehnder interferometer, e.g. via a further multimode interference coupler 107, e.g. via a 1x2 multimode interference coupler.

The reference numerals 106a, 106b, 106c denote the exemplary interferometric output signals *iₖ* of the outputs 103a, 103b, 103c of the multimode interference coupler.

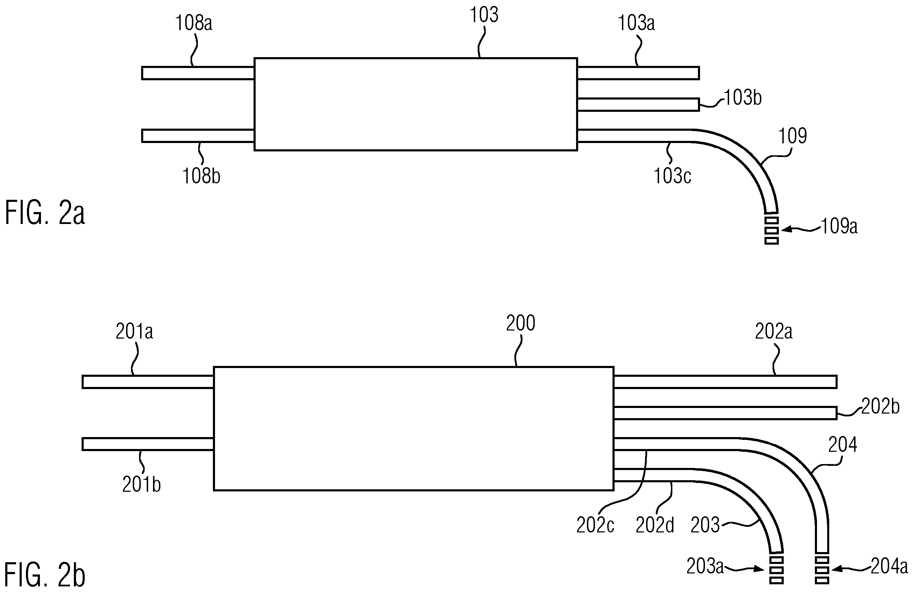

**Fig. 2a** exemplary shows a simplified view of the exemplary 2x3 multimode interference coupler 103 of the photonic biosensor 101 of Fig. 1 in an exemplary configuration wherein the two outputs 103a, 103b provide two 120° phase-shifted interferometric output signals for coherent readout by a readout system (not shown) and wherein the third output port 103c of the multimode interference coupler 103 is coupled to an exemplary lossy structure 109 which is exemplary implemented as a waveguide that exemplary bends away from the outputs 103a, 103b and that at its end has an exemplary grating 109a for radiating away optical power from the output 103c. For example, said grating 109a may radiate at least 50% of the optical power outputted by output 103c.

The reference numerals 108a, 108b denote the exemplary inputs of the multimode interference coupler 103 that are coupled to arms of the Mach-Zehnder interferometer 102 (not visible here but in Fig.1), wherein the input 108a can be coupled to the sensing arm 102a (not shown) and input 108b can be coupled to the reference arm 102b (not shown) of the Mach-Zehnder interferometer 102.

**Fig. 2b** exemplary shows a simplified view of an exemplary 2x4 multimode interference coupler 200 that also could be used in a sensing device as previously described.

In this exemplary configuration, the two outputs 202a and 202b provide two 90° shifted interferometric output signals for coherent readout by a readout system (not shown) and the remaining two outputs 202c and 202d are each coupled to a lossy structure 203, 204, with output 202c being coupled to lossy structure 204 and output 202d being coupled to lossy structure 203.

Said exemplary lossy structures 203, 204 are exemplary configured to bend away from the outputs 202a and 202b and are of similar type as the lossy structure 109 of multimode interference coupler 103 from Fig. 2a. Stated differently, both lossy structures 203, 204 can be implemented as waveguides that each comprise a grating 203a, 204a at their ends for radiating away optical power from the outputs 202c, 202d to which they are coupled.

The reference numerals 201a, 201b denote the exemplary inputs of the multimode interference coupler 200 that can be coupled to the arms of the Mach-Zehnder interferometer 102 of Fig. 1, wherein the input 201a could be coupled to the sensing arm 102a (not shown) and input 201b could be coupled to the reference arm 102b (not shown) of the Mach-Zehnder interferometer 102.

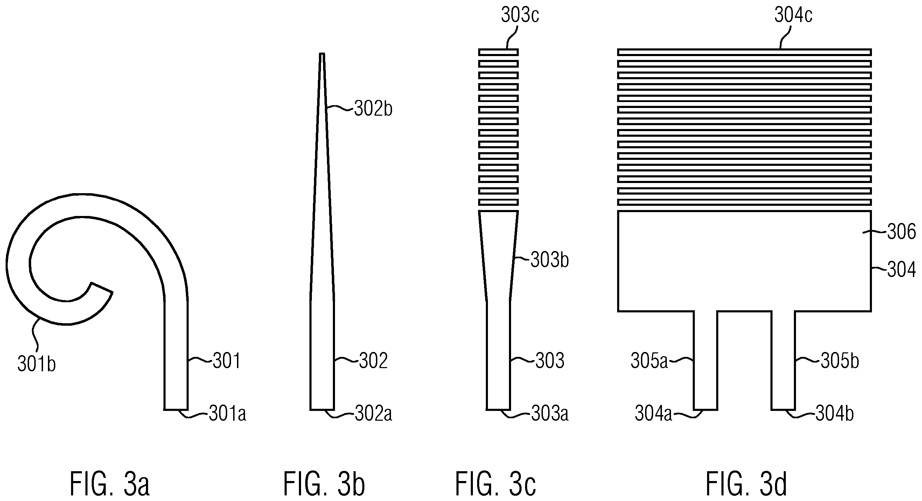

**Fig. 3a, Fig. 3b, Fig. 3c** and **Fig. 3d** show examples for possible types of lossy structures that can be coupled to outputs of any of the above-described multimode interference couplers, e.g. multimode interference couplers 103, 200, and that can radiate away optical power from the outputs of any of the above-described multimode interference couplers to which they can be coupled.

**Fig. 3a** shows an exemplary lossy structure 301 implemented as a waveguide that curls or bends into a spiral-like arc 301b at its end, wherein the reference numeral 301a denotes the side of the lossy structure 301 that can be coupled to an output of any of the above-described multimode interference couplers.

**Fig. 3b** shows an exemplary lossy structure 302 implemented as a straight waveguide that tapers or narrows at its end 302b, wherein the reference numeral 302a denotes the side of the lossy structure 302 that can be coupled to an output of any of the above described multimode interference couplers. However, it is also possible that the lossy structure 302 can be bent in a similar way as the lossy structure 301 of Fig. 3a.

**Fig. 3c** shows an exemplary lossy structure 303 implemented as a straight waveguide that couples to a grating 303c, wherein the transition region 303b from the straight waveguide to the grating 303c has a trapezoidal shape acting as a taper. The reference numeral 303a denotes the side of the lossy structure 303 that can be coupled to an output of any of the above-described multimode interference couplers. Again, it is also possible that the lossy structure 303 can be bent in a similar way as the lossy structure 301 of Fig. 3a.

**Fig. 3d** shows an exemplary lossy structure 304 implemented as pair of straight waveguides 305a, 305b that connect to an output grating 304c, wherein the transition region 306 from the straight waveguides 305a, 305b to the grating 304c has a rectangular shape. The reference numerals 304a, 305b denote the sides of the waveguides 305a, 305b that each can be coupled to an output of any of the above-described multimode interference couplers. Stated differently, the lossy structure 304 can be coupled to two outputs of any of the above-described multimode interference couplers.

It is emphasized again that the shapes illustrated in **Fig. 3a, Fig. 3b, Fig. 3c** and **Fig. 3d** are exemplary only and also other shapes for the lossy structure are conceivable, including a simple discontinuity in the output waveguide, e.g. wherein the waveguide has been cut with respect to its original initial length.

Also the exemplary lossy structures 301, 302, 303, 304 could be directly integrated into the outputs of any of the above-described multimode interference couplers.

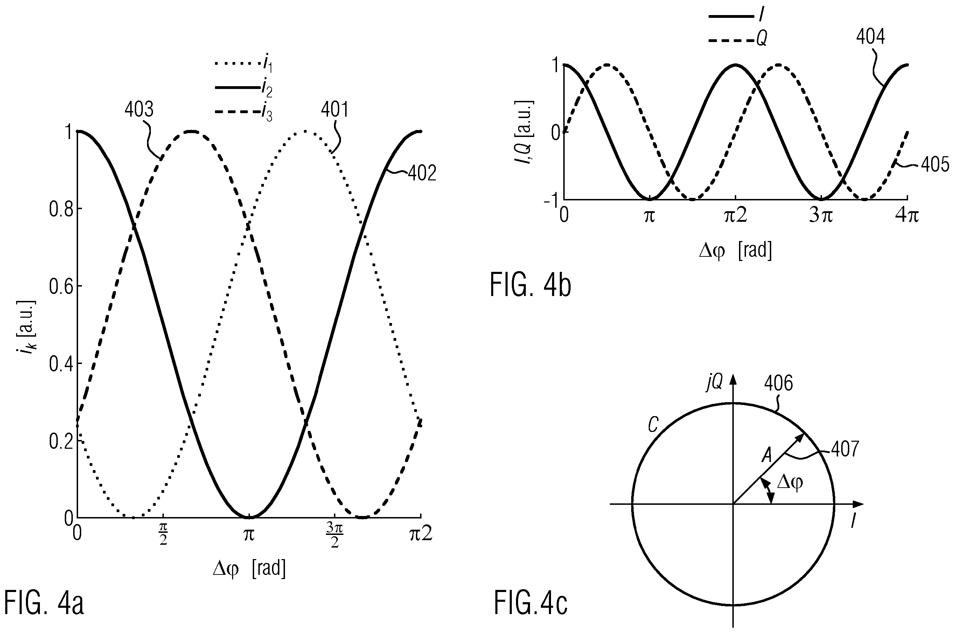

**Fig. 4a** shows an example of the previously described interferometric output signals *iₖ*(*t*) according to the further above described Equation 1 that can be outputted by the 2x3 multimode interference coupler 103 of Fig. 1, wherein the interferometric output signals *iₖ*, 401, 402, 403, are measured in arbitrary units [a.u.] of photocurrent, e.g. after detection via a readout system involving the use of photodetectors, e.g. photodiodes.

A typical optical power output of a photonic integrated circuit operating in the near-infrared is in the order of microwatts to hundreds of microwatts when driven by a 100 mW laser, after accounting for losses. Common photodetectors used to measure these optical signals typically yield photocurrents of comparable magnitude, given responsivities of approximately 1 A/W.

As a result, the measured photocurrents generally range from microamperes to milliamperes, i.e. the arbitrary units [a.u.] of photocurrent may represent values in microamperes or milliamperes.

The X-axis represents the phase difference Δφ between the two arms of the Mach-Zehnder interferometer, while the Y-axis shows the interferometric output signals *iₖ, k* =1,2,3 from the outputs 103a, 103b, 103c measured as photocurrents via the readout system.

As Δφ sweeps through all values from 0 to 2π, each combination of interferometric output signals (i₁, i₂, i₃) forms a unique point or "constellation" in the measured output, demonstrating that every phase difference in the 0 to 2π range maps to a distinct set of three photocurrents.

**Fig. 4b** exemplary shows the in-phase (I), 404, and quadrature-phase (Q), 405, components of the complex interferometric signal *C* in arbitrary units [a.u.] calculated from the three interferometric output signals *iₖ* according to the previously described Equation 2.

This representation separates the signal into its real (I) and imaginary (Q) parts, thereby capturing the full amplitude and phase information of the complex interferometric signal *C*.

**Fig. 4c** exemplary shows the complex interferometric signal *C,* 406, in the complex plane also referred to as the IQ plane. In this representation, the horizontal axis corresponds to the real part (the in-phase component), while the vertical axis corresponds to the imaginary part (the quadrature component, expressed as jQ, where j is the imaginary unit). This plot provides a complete visualization of the amplitude and phase of the complex interferometric signal *C.*

The vector marked *A,* 407, represents the amplitude or overall magnitude of the complex interferometric signal *C.*

Δφ(t) represents the phase difference between the two interfering optical signals, i.e. the dynamic phase shift between the sensing arm and the reference arm of the Mach-Zehnder interferometer.

This phase difference modulates the complex interferometric signal *C = Ae*^{*-j*Δ*φ*(*t*)}, so that as Δφ(t) varies, the corresponding vector in the complex (IQ) plane rotates accordingly. For simplicity, the constant value *φ*₀ can be assumed to be zero.

Essentially, Δφ(t) is the parameter that encodes the phase information extracted from the interference pattern, proportional to the dynamic refractive index changes in the medium external to the sensing arm during a sensing event.

In this example, the complex interferometric signal *C* has been normalized so that the circle traced out by the complex interferometric signal *C* maps to the complex unit circle.

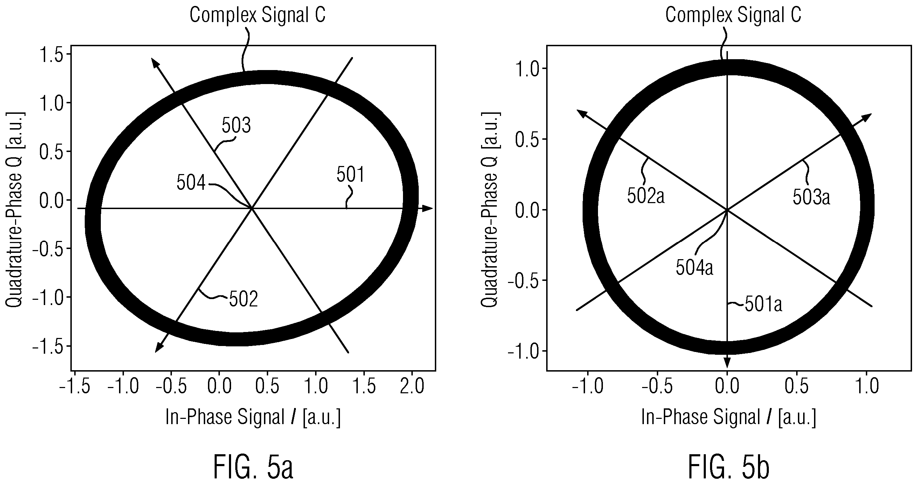

**Fig. 5a** and **Fig. 5b** illustrate an exemplary calibration process for the complex interferometric signal C when reading out all outputs of the multimode interference coupler, e.g. all three outputs of the 2x3 multimode interference coupler 103.

When a sensing event occurs, the complex interferometric signal *C* ideally describes a circular trajectory in the complex (IQ) plane.

However, in practice, for example due to coupling losses between the interferometric output signals provided by the outputs of the multimode interference coupler and a/the readout system, the raw complex interferometric signal *C* forms an ellipse rather than a perfect circle.

**Fig. 5a** displays an example of a raw uncalibrated IQ trajectory of the complex interferometric signal C during a sensing event. In this IQ (complex) plane representation, the horizontal axis corresponds to the in-phase component I in arbitrary units [a.u.] and the vertical axis to the quadrature component Q in arbitrary units [a.u.].

The exemplary finite width of the shown IQ trajectory of the complex interferometric signal C exemplary indicates the effect of noise and minor variations in light coupling efficiency, both in input and output, during the readout of the interferometric output signals provided by the outputs of the multimode interference coupler. The elliptic shape in this IQ trajectory, deviating from a perfect circle, can be attributed to different coupling efficiencies of the three outputs of the multimode interference coupler to the corresponding light-detection elements of the readout system.

The reference numerals 501, 502, 503 exemplary mark the projections of the three interferometric output signals of the 2x3 MMI 103 in the IQ plane before calibration. The reference numeral 504 exemplary marks the center of the uncalibrated IQ trajectory of the complex interferometric signal C. In this example the uncalibrated IQ trajectory is off-center with respect to the origin at (0,0) of the IQ plane.

To correct and compensate for the coupling losses between the sensing device and the readout system, i.e. between the multimode interference coupler and the readout system, a calibration of the complex interferometric signal *C* can be carried out.

Said possible calibration can inter alia comprise fitting an ellipse or circle to a/the complex interferometric signal derived from the collected interferometric output signals, in the in-phase and quadrature components plane.

For example, said possible calibration can comprise inter alia the following steps in the following order or in a different order.
- Rotation: The elliptical trajectory is rotated so that its principal axes align with the coordinate axes of the IQ plane.
- Centering or recentering: The data is shifted so that the center of the ellipse is moved to the origin of the IQ plane, eliminating any offsets.
- Scaling (eccentricity elimination): The ellipse can be scaled, e.g. stretched or compressed along its axes to remove the eccentricity, thereby mapping it onto a circle, e.g. the unit circle.

After calibration, i.e. when applying these transformations to the complex interferometric signal *C*, the IQ data forms a circular trajectory, which represents an ideal mapping of the phase information, thereby facilitating accurate extraction of the phase from the complex interferometric signal *C.*

**Fig. 5b** shows an exemplary result after a calibration process, as described above, is applied to the uncalibrated IQ data, i.e. the uncalibrated complex interferometric signal *C.*

The calibration rotates, centers, and corrects the elliptical distortion, thereby restoring the circular shape of the complex interferometric signal *C.*

The reference numerals 501a, 502a, 503a exemplary mark the projections of the three read-out interferometric output signals of the 2x3 MMI 103 in the IQ plane after the calibration.

The reference numeral 504a exemplary marks the center of the calibrated IQ trajectory of the complex interferometric signal C, wherein now the center of the calibrated IQ trajectory of the complex interferometric signal C coincides with the origin at (0,0) of the IQ plane.

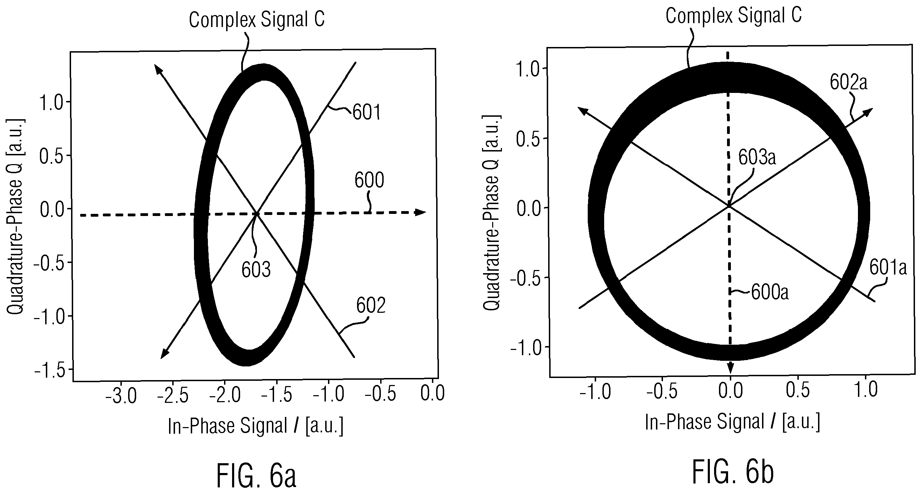

**Fig. 6a** and **Fig. 6b** illustrate an exemplary calibration process for the complex interferometric signal *C* when reading out only two outputs of the multimode interference coupler, e.g. when reading out only two outputs of the 2x3 multimode interference coupler 103. In this exemplary scenario one output of the multimode interference coupler is not readout and is coupled to a lossy structure, e.g. a lossy structure as exemplary described previously, e.g. in Figs. 3a to 3c.

The complex interferometric signal *C* can again be calculated from Equation 2 but with setting one of the three interferometric output signals *iₖ* (with k=1,2,3) to zero.

The horizontal axes of **Fig. 6a** and **Fig. 6b** represent again in arbitrary units [a.u.] the in-phase component (I) and the vertical axis represent the quadrature component (Q) of the calculated complex interferometric signal *C* derived from the collected interferometric output signals.

**Fig. 6a** shows the uncalibrated IQ trajectory in the complex IQ (complex) plane, i.e. the uncalibrated complex interferometric signal *C,* when one of the outputs of the 2X3 multimode interference coupler (MMI), e.g. output 103c of MMI 103, is suppressed, i.e. not readout but instead is coupled to a lossy structure, e.g. lossy structure 109.

In this case, the signal projection of the interferometric output signal corresponding to the suppressed output is missing, which is indicated by the dashed line with reference numeral 600 marking the suppressed axis.

The reference numerals 601, 602 exemplary mark the projections of the two read out interferometric output signals of the 2x3 MMI 103, i.e. from outputs 103a and 103b, in the IQ plane before calibration. The reference numeral 603 exemplary marks the center of the uncalibrated IQ trajectory of the complex interferometric signal C. In this example the uncalibrated IQ trajectory is off-center with respect to the origin at (0,0) of the IQ plane.

As a result of suppressing the output 103c, the uncalibrated complex interferometric signal *C*, again does not form a perfect circle but instead appears as an extremely eccentric ellipse, reflecting the incomplete set of projections, i.e. the incomplete readout of the outputs of the MMI. Herein, an extremely eccentric ellipse can inter alia be understood as an ellipse with an eccentricity greater than 0.75. However, as previously indicated, the Applicant has found that even in such a case of using only a reduced number of outputs of the MMI, the obtained complex interferometric signal *C* can still provide a reliable and accurate means for the detection of a target analyte in a/the fluidic sample.

**Fig. 6b** displays the IQ trajectory or complex interferometric signal *C* after applying an exemplary calibration process, as exemplary described above, to the uncalibrated IQ trajectory or complex interferometric signal *C* of **Fig 6a****.**

As previously explained, the calibration rotates, centers, and scales the raw complex interferometric signal *C* to compensate for the missing projection, i.e. the missing/not readout output, and to correct the elliptical distortion. The calibration corrects the elliptical distortion and produces a corrected IQ trajectory that compares well with the IQ trajectory obtained from all three outputs of the 2X3 multimode interference coupler displayed in **Fig. 5b****.**

The reference numerals 601a, 602a, exemplary mark the projections of the two read out interferometric output signals of the 2x3 MMI 103 in the IQ plane after the calibration.

The reference numeral 603a exemplary marks the center of the calibrated IQ trajectory of the complex interferometric signal C, wherein now the center of the calibrated IQ trajectory of the complex interferometric signal C coincides with the origin at (0,0) of the IQ plane.

For completeness, it is noted that during calibration, as indicated by the reference numeral 600a, the orientation of the suppressed axis may change due to the transformation applied by the calibration algorithm for restoring a circular or near-circular trajectory that allows for accurate phase extraction despite the decimation of one output.

In the shown example, as a result of the alignment of the major axis of the IQ trajectory in **Fig. 6a** with the I axis during the calibration, the suppressed axis 600 gets rotated by 90°.

For completeness, it is further noted that in the absence of a sensing event, i.e. in the absence of a phase shift, the complex interferometric signal *C* remains at a fixed point in the IQ plane rather than tracing out a circle.

The full circular trajectory is observed only when the phase difference between the Mach-Zehnder interferometer arms varies continuously over a full 360°(2π), thereby rotating the signal vector through all possible angles.

In practice the phase difference between the Mach-Zehnder interferometer arms does not always vary over a full 360° (2π) during the sensing event of the target analyte.

However, the Applicant has found that it is also possible to obtain reliable and accurate results when the phase difference only covers a fraction of 360°(2π), e.g. only 180° of 360°, i.e. the phase can be recovered even when the uncalibrated complex interferometric signal C does not form a full circle or a full ellipse.

Followed by Figures Fig. 1, Fig. 2a, Fig. 2b, Fig. 3a, Fig. 3b, Fig. 3c, Fig. 3d, Fig. 4a, Fig. 4b, Fig. 4c, Fig. 5a, Fig. 5b, Fig. 6a and Fig. 6b, wherein the reference numerals are as follows.
100 Exemplary photonic integrated circuit
101 Exemplary photonic biosensor
102 Exemplary Mach-Zehnder interferometer (MZI)
102a Exemplary first arm of Mach-Zehnder interferometer, exemplary sensing arm
102b Exemplary second arm of Mach-Zehnder interferometer, exemplary reference arm
103 Exemplary multimode interference coupler (MMI), e.g. 2x3 multimode interference coupler
103a Exemplary (first) output of multimode interference coupler, exemplary output port
103b Exemplary (second) output of multimode interference coupler, exemplary output port
103c Exemplary (third) output of multimode interference coupler, exemplary output port
104 Exemplary illustration of biochemical functionalization of sensing arm to target analyte molecules in a fluidic sample in the vicinity of sensing arm, e.g. on the sensing arm surface
105 Exemplary inputted light from at least one light source
106a, 106b, 106c, Exemplary interferometric output signals of the outputs 103a, 103b, 103c
107 Exemplary 1x2 multimode interference coupler
108a Exemplary input of multimode interference coupler, e.g. connected to sensing arm of the MZI
108b Exemplary input of multimode interference coupler, e.g. connected to reference arm of the MZI
109 Exemplary lossy structure
109a Exemplary grating of lossy structure
200 Exemplary 2x4 multimode interference coupler
201a Exemplary input of multimode interference coupler, e.g. connected to sensing arm of the MZI
201b Exemplary input of multimode interference coupler, e.g. connected to reference arm of the MZI
202a Exemplary (first) output of the MMI, exemplary output port
202b Exemplary (second) output of the MMI, exemplary output port
202c Exemplary (third) output of the MMI, exemplary output port
202d Exemplary (fourth) output of the MMI, exemplary output port
203 Exemplary lossy structure
203a Exemplary grating of lossy structure
204 Exemplary lossy structure
204a Exemplary grating of lossy structure
301 Exemplary lossy structure
301a Exemplary side of lossy structure that can be coupled to an output of a/the MMI
301b Exemplary bent end or curved end or spiral-like arc-shaped end
302 Exemplary lossy structure
302a Exemplary side of lossy structure that can be coupled to an output of a/the MMI
302b Exemplary tapered end of the lossy structure
303 Exemplary lossy structure
303a Exemplary side of lossy structure that can be coupled to an output of a/the MMI
303b Exemplary transition
303c Exemplary grating
304 Exemplary lossy structure
304a Exemplary (first) side/port of lossy structure that can be coupled to an output of a/the MMI
304b Exemplary (second) side/port of lossy structure that can be coupled to an output of a/the MMI
304c Exemplary grating
305a Exemplary waveguide
305b Exemplary waveguide
306 Exemplary transition region
401, 402, 403 Exemplary interferometric output signals *iₖ*(*t*)
404 Exemplary in-phase (I) component of the complex interferometric signal *C*
405 Exemplary quadrature-phase (Q) component of the complex interferometric signal *C*
406 Exemplary complex interferometric signal *C*
407 Exemplary vector in IQ plane representing the amplitude or overall magnitude of the complex interferometric signal *C*
501 Exemplary projection/axis of an interferometric output signal of the 2x3 MMI 103 in IQ plane before calibration, e.g. interferometric output signal from output 103b of 2x3 MMI 103
502 Exemplary projection/axis of an interferometric output signal of the 2x3 MMI 103 in IQ plane before calibration, e.g. interferometric output signal from output 103a of the 2x3 MMI 103
503 Exemplary projection/axis of an interferometric output signal of the 2x3 MMI 103 in IQ plane before calibration, e.g. interferometric output signal from output 103c of the 2x3 MMI 103
504 Exemplary center of uncalibrated IQ trajectory of the complex interferometric signal *C* during a sensing event, i.e. exemplary center of uncalibrated complex interferometric signal *C*
501a Exemplary projection/axis 501 of the interferometric output signal of the 2x3 MMI 103 in IQ plane after calibration
502a Exemplary projection/axis 502 of the interferometric output signal of the 2x3 MMI 103 in IQ plane after calibration
503a Exemplary projection/axis 503 of the interferometric output signal of the 2x3 MMI 103 in IQ plane after calibration
504a Exemplary center of calibrated IQ trajectory, i.e. exemplary calibrated complex interferometric signal *C*
600 Exemplary suppressed axis, exemplary projection of suppressed, i.e. not read out, interferometric output signal, e.g. from output 103b of the 2x3 MMI 103
601 Exemplary projection/axis of an interferometric output signal of the 2x3 MMI 103 in IQ plane, e.g. from output 103a, before calibration
602 Exemplary projection/axis of an interferometric output signal of the 2x3 MMI 103 in IQ plane, e.g. from output 103c, before calibration
603 Exemplary center of uncalibrated IQ trajectory of the complex interferometric signal *C* during a sensing event
600a Exemplary suppressed axis 600 after calibration, i.e. exemplary projection of the suppressed interferometric output signal of the 2x3 MMI 103, e.g. from the output 103a, after the calibration
601a Exemplary projection/axis 601 of the interferometric output signal of the 2x3 MMI 103 in IQ plane after calibration
602a Exemplary projection/axis 602 of the interferometric output signal of the 2x3 MMI 103 in IQ plane after calibration
603a Exemplary center of calibrated IQ trajectory, i.e. exemplary calibrated complex interferometric signal *C*

## Claims

1. Sensing device for detecting a target analyte in a fluidic sample, comprising:
a photonic integrated circuit (100) comprising at least one photonic biosensor (101) for detecting a target analyte in a fluidic sample and at least one lossy structure (109) configured for radiating or absorbing optical power, wherein said at least one photonic biosensor comprises:
a Mach-Zehnder interferometer (102) with two arms (102a, 102b) and a multimode interference coupler (103) connected to the two arms (102a, 102b) of the Mach-Zehnder interferometer (102), wherein the multimode interference coupler (103) has a plurality of outputs (103a, 103b, 103c), and
wherein at least one output (103c) of the multimode interference coupler (103) is coupled to said at least one lossy structure (109) and the remaining outputs (103a, 103b) of the multimode interference coupler (103) are configured for coherent readout by a readout system.

2. The sensing device according to the preceding claim, wherein the multimode interference coupler is a MxN multimode interference coupler, having M inputs, with M being greater than or equal to two, and having N outputs, with N being greater than or equal to three, wherein at least one output of the multimode interference coupler is coupled to said at least one lossy structure and wherein at least two outputs of the multimode interference coupler are configured for coherent readout by the readout system.

3. The sensing device according to the preceding claim, wherein the multimode interference coupler is a 2x3 multimode interference coupler (103), having two inputs (108a, 108b) that are coupled to the arms (102a, 102b) of the Mach-Zehnder interferometer (102), and having three outputs (103a, 103b, 103c), wherein one output (103c) is coupled to said at least one lossy structure (109) and the other two outputs (103a, 103b) are configured for coherent readout by the readout system.

4. The sensing device according to claim 2, wherein the multimode interference coupler is a 2x4 multimode interference coupler (200), having two inputs (201a, 201b) that are coupled to the arms of the Mach-Zehnder interferometer, and having four outputs (202a, 202b, 202c, 202d), wherein two outputs (202c, 202d) are coupled to said at least one lossy structure or wherein said two outputs (202c, 202d) are coupled to different lossy structures (203, 204); and wherein the other two outputs (202a, 202b) that are not coupled to a lossy structure are configured for coherent readout by the readout system.

5. The sensing device according to one of the preceding claims, comprising at least one lossy structure configured for radiating or absorbing optical power that is integrated into one of the outputs of the multimode interference coupler and/or wherein the sensing device comprises at least one lossy structure (304) configured for radiating or absorbing optical power that is coupled to at least two outputs of the multimode interference coupler.

6. The sensing device according to one of the preceding claims, comprising at least one lossy structure (301, 302, 303) configured for radiating optical power, wherein said lossy structure is implemented as a grating and/or as waveguide, wherein said waveguide comprises a narrowing or bending or discontinuity.

7. The sensing device according to one of the preceding claims, wherein the photonic integrated circuit (100) comprises an array of photonic biosensors.

8. The sensing device according to one of the preceding claims, wherein the outputs (103a, 103b, 103c, 202a, 202b, 202c, 202d) of the multimode interference coupler that are configured for coherent readout by the readout system are configured for providing a set of interferometric output signals that have a phase shift different from zero or 180°.

9. The sensing device according to one of the preceding claims, wherein the sensing device further comprises a fluidic cartridge comprising at least one fluidic channel for transporting a fluidic sample to the at least one photonic biosensor.

10. Photonic biosensor for detecting a target analyte in a fluidic sample for use in a sensing device according to one of the preceding claims, comprising:
a Mach-Zehnder interferometer (102) with two arms (102a, 102b) and a multimode interference coupler (103, 200) connected to the two arms (102a, 102b) of the Mach-Zehnder interferometer (102), wherein the multimode interference coupler (103, 200) has a plurality of outputs (103a, 103b, 103c, 202a, 202b, 202c, 202d), and
wherein at least one output (103c, 202c, 202d) of the multimode interference coupler (103, 200) is couplable to at least one lossy structure (109, 203, 204) configured for radiating optical power, and wherein the remaining outputs (103a, 103b, 202a, 202b) of the multimode interference coupler (103, 200) are configured for coherent readout by a readout system.

11. Method for reading out a sensing device according to one of the preceding sensing device claims, the method comprising:
inputting light from at least one light source (105) into the at least one photonic biosensor (101) of the photonic integrated circuit (100),
and collecting, by a readout system, optical signals only from a subset of all available output ports of the multimode interference coupler (103, 200).

12. The method according to the preceding claim, further comprising a calibration of the collected optical signals.

13. The method according to the preceding claim, wherein the calibration comprises fitting an ellipse or circle obtained from the collected optical signals in the in-phase and quadrature components plane.

14. System for reading out a sensing device for detecting a target analyte in a fluidic sample, comprising:
at least one light source (105);
a sensing device according to one of the preceding sensing device claims;
a readout system;
wherein the at least one light source is configured for inputting light into the at least one photonic biosensor (101) of the photonic integrated circuit (100) of the sensing device; and
wherein the readout system is configured for collecting optical signals only from a subset of all available output ports of the multimode interference coupler (103, 200) of the at least one photonic biosensor (101) of the photonic integrated circuit (100) of the sensing device.

15. The system according to the preceding claim, wherein the at least one light source (105) is a coherent light source, e.g. a laser, in particular a continuous-wave fiber laser, e.g. a continuous-wave fiber laser emitting in the range of 630 nm to 1550 nm and emitting an optical power in the range of 20 mW to 100 mW.
